(19) Europäisches Patentamt

European Patent Office

Office européen des brevets

(11) **EP 2 434 723 A1**

(12) **EUROPEAN PATENT APPLICATION**

(43) Date of publication:
**28.03.2012 Bulletin 2012/13**

(51) Int Cl.:
**H04L 29/08** *(2006.01)* **H04N 21/00** *(2011.01)*

(21) Application number: **11160675.2**

(22) Date of filing: **31.03.2011**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **24.09.2010 EP 10306035**

(71) Applicant: **Thomson Licensing
92130 Issy-les-Moulineaux (FR)**

(72) Inventors:
• **Ioannidis, Efstratios
92443, ISSY LES MOULINEAUX cedex (FR)**
• **Chaintreau, Augustin
92443, Issy-les-Moulineaux cedex (FR)**
• **Isaacman, Sibren
92443, Issy-les-Moulineaux cedex (FR)**

(74) Representative: **Chabasseur, Vincent Robert
Technicolor
European Patent Operations
1 rue Jeanne d'Arc
92443 Issy-les-Moulineaux cedex (FR)**

(54) **Classifying content**

(57) This relates to content classification and recommendation, and is particularly suitable for use in an ad-hoc peer to peer network. As classification data relating to a given content propagates through network in a hop by hop fashion, it is updated with a training step at each hop. The training involves comparing a user response to the content with a predicted response based on the classification data as well as a user profile. Depending on the predicted response in relation to the actual user response, the classification data is updated.

FIG.1

EP 2 434 723 A1

## Description

The present invention relates to the classification of content, in particular the classification content for use with mobile devices.

A traditional approach to content delivery on mobile devices such as mobile telephone devices is based on a centralized model in which content providers use infrastructure to reach a large user base. However, mobile telephones, also known as cell phones, have evolved from single-purpose telephony devices to multi-purpose personal computing platforms. The demand for up-to-date, high-resolution content is quickly filling network capacity, and an increasing number of users are accessing content from Internet-based servers, thereby straining existing wireless infrastructure.

As an alternative approach, content providers and users can potentially take advantage of unlicensed spectrum (*e.g.*, WiFi, Bluetooth, or UHF white spaces. They may do this either in a pure opportunistic ad-hoc mode, or through a "virtual" wireless service provider that uses handoffs between different technologies. Popular content can in principle then be disseminated over a mobile peer-to-peer network, reducing the overall traffic load imposed on the infrastructure of the wireless provider. In this way, opportunistic content sharing based on ad hoc connections between users as they move in and out of proximity of one another can reduce the load on the existing infrastructure.

An advantage of using the centralized model is the low delay experienced by users in comparison to the delay that may be experienced in a peer-to-peer network. It has been appreciated by the present inventors that delay may be reduced if content reaches a user's device before the user requests it. In this context, it can be desirable to have a recommender system that provides information on how to select relevant content to be pre-fetched to user's device before the user explicitly request that content. However, a recommender system, in particular a recommender system for use in a distributed environment, can benefit from an efficient manner of classifying content.

According to one aspect of the present invention, there is provided a method of improving the accuracy of classification data as the classification data is propagated through a network of mobile devices, the classification data relating to the classification of content, including:

(i) establishing a connection between a first mobile device and a second mobile device;
(ii) receiving, at the first mobile device, classification data from the second mobile device, which classification data is associated with a given content, the classification data being dependent on the classification of the given content;
(iii) updating the classification data by performing a training step thereon at least in part at the first mobile device; and,
(iv) forwarding the updated classification data to a third mobile device.

Because the classification data, hereinafter referred to as a tag, is updated, it will on average more accurately reflect one or more categories into which the content is classified, and can then be used by the third mobile device to provide a more accurate prediction of user reaction to the given content. The accuracy of the tag is thus improved as it propagates from device to device. Performing the steps above at different devices in for example an opportunistic network results on average in a gradual improvement of the tag data as the tag data diffuses from device to device through the network. In this way, the accuracy of the tags are improved in a distributed or decentralised fashion.

Furthermore, the forwarding of a tag from one device to another is, on average, likely to be particularly useful in improving the accuracy of the tag because there is likely to be a relationship between the interests or personal tastes of users and the likelihood that their mobile devices will form connections with one another. That is, by forwarding a tag from one device to another, the naturally occurring social relationships between users and its effect on the connections formed in an opportunistic network is exploited. As a result a more rapid convergence of a tag towards an accurate value is obtained.

In a preferred embodiment, the training step includes rendering the content at least in part on the first mobile device; and, obtaining a user response to the content. By using a actual user response, the accuracy of the tag can effectively be tested and improved.

The training step may further include: making a prediction of a user response to the content associated with the received classification data, the prediction being made using the user profile and the classification data; and, comparing the predicted user response with the actual user response to the given content, the classification data being updated in dependence on the result of the comparison. Because the prediction is made using the user profile, the comparison is more likely to reflect the accuracy of the tag. Clearly, the prediction may be made after the actual user response.

Preferably, in a further step, the user profile is updated in dependence on the result of the comparison. The updated user profile at the first device can subsequently be used to provide more accurate prediction in respect of different content using different associated tag data.

Yet more preferably, step (iii) is performed in respect of each newly received tag data using the user profile updated as a result of a comparison with previously received tag data. Such an iterative or cyclic process allows content to be progressively better categorised each time it is forwarded from one device to another device, thereby reducing the need for a centralised system to classify data. Likewise, at any given device, such an iterative process effectively trains the device to know the user profile of the user. In this way, the user profile is made more accurate each time fresh content is received and viewed.

The content associated with each tag may be received from the second mobile device. However, in order to conserve the bandwidth between devices, the content associated with each tag maybe referenced in a link received from the second mobile device, the link containing a pointer which the first mobile device can use to obtain content from a location remote to the first the device. Preferably, the pointer will be a hyperlink which can be used by the first mobile device to download the content over the Internet.

In a preferred embodiment the tag can be represented by a linear array having a plurality of positions, the array forming a vector, and each position being associable with a respective subject category. In such an embodiment, the user profile can likewise be represented by a plurality of vectors each of which is arranged as an array, each array having a plurality of positions, matching array positions in the interest profile and in the tag being associated with matching subject categories. This allows the tag and user profile to be conveniently manipulated in order to perform operations. In particular, in a preferred embodiment, the user response is obtained by performing an operation which can be represented as the inner product between the tag vector and at least one of the interest profile vectors.

The mobile device will preferably have user input means, such as a user interface. The user interface will preferably have keys, either formed as buttons or as touch areas on a touch-sensitive display. In a preferred embodiment, the user is presented with a plurality of rating options which the user can enter in response to viewing data. In such an embodiment, the user profile vector is associated with an available user rating, and wherein the user response is obtained by calculating the inner product between the tag vector and a user profile vector corresponding to each of the available user ratings.

The tag may be used to recommend data to a user, for example by performing an operation based on the user's profile and the tag. The recommendation may be made with respect to content already stored on the user's mobile device. However, the recommendation may be performed as a filtering step, such that content that meets certain criteria based on both the user profile and the classification of content is downloaded.

An operation may be performed involving a newly received tag and the user profile, the result of the operation being used to determine whether the content associated with the newly received tag is rendered on the first mobile device. As a result, content received at the first mobile device is effectively filtered before it is presented to a user. This will be particularly advantageous in situations where the mobile device is able to access a large number of content files which may not all be relevant to the user. In particular, it will be advantageous to filter the data in situations where the device is arranged to automatically access content, for example by running a background process.

According to another aspect of the present invention, there is provided a mobile device for use in a network, the mobile device having a communication stage for establishing a connection with another mobile device; a processing stage for processing data, the communication stage being arranged to receive classification data from the other mobile device, which classification data is associated with a given content, the classification data being dependent on the classification of the given content, the processing stage being arranged to perform a training step on the classification data before the classification data is forwarded to another device.

Clearly, the classification of content need not be carried out with a recommender system, but may instead be used for another purpose, such as to provide a storage arrangement in which content may be accessed by making a selection as to category.

The invention will now be described by way of example only, with reference to the following drawings in which:

Figure 1 shows a network according to an embodiment of the invention;
Figure 2 shows a mobile device;
Figure 3 shows the structure of a data file; and,
Figure 4 shows a structure of a user profile.

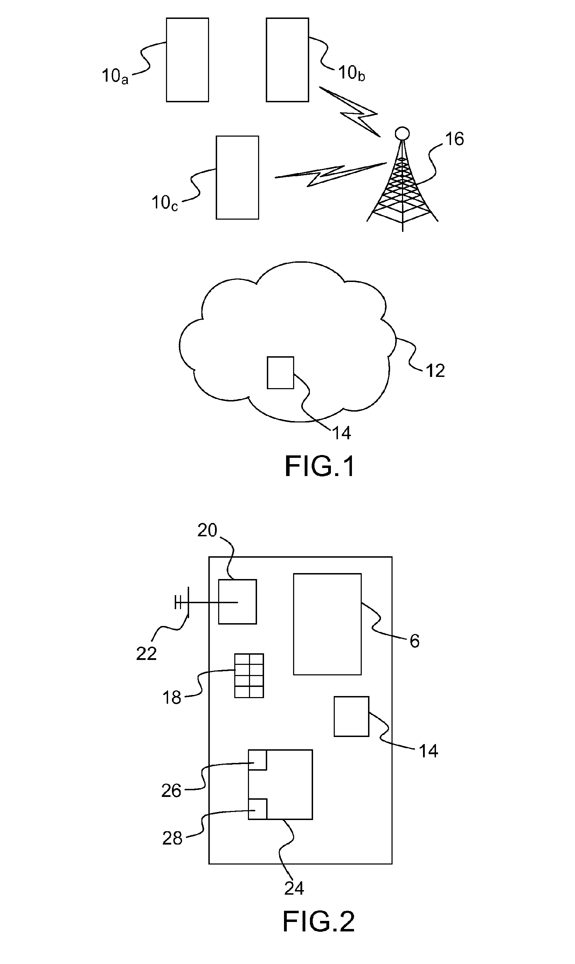

Figure 1 shows an opportunistic network 1 comprising a plurality of mobile devices 10a,10b,10c. The mobile devices are each equipped to communicate in a short range wireless mode by forming a temporary connection, for example using the Bluetooth protocol. The devices are also equipped to communicate in a long-range wireless mode using GSM for example. Typically, the mobile devices will be hand held devices with telephony functionality.

The mobile devices can communicate directly with one another in the short range mode when in range of one another, the range being typically a few meters, normally less than 10 m. Because the mobile devices are carried about by their respective users, different devices move in and out of range of one another such that, at a network level, the connections between devices change with time in the manner that can appear random, uncertain or at least difficult to predict. That is, connections between devices are formed in an ad hoc manner. When two mobile devices move into range of one another, each can exchange data in an opportunistic manner with the other: that is, each device can make use of the opportunity provided by the proximity of the other device.

In the long-range mode, each mobile device is arranged to communicate wirelessly to a base station 12 connected to a network 12 such as the Internet. Within the Internet 12, there are located one or more servers 14 from which the mobile devices can access content (alternatively or in addition, the mobile devices may have an additional mode of communication such as an Ethernet or other electrical connection, or another wireless mode such as WiFi for connecting to the Internet). Users can thus download content from the Internet in long-range mode and subsequently pass the content among themselves in an opportunistic manner using short range communication.

Figure 2 shows one of the mobile devices 10 in more detail. The mobile device 10 has a display 12 and a speaker 14 for rendering content. A plurality of keys on the 18 are provided for a user to enter instructions, although the keys 18 may be integrally formed with the display in the event that the display is touch sensitive.

The mobile device 10 has a communication stage 20 with an antenna system 22 for transmitting and receiving information in a wireless fashion in the long-range mode all the short range mode. A data processing stage 24 is operatively connected to the communication stage 20 in order to process data received therefrom and to prepare data for transmission. The data processing stage has a processor facility 26 as well as a memory 28 for respectively performing operations and storing data including content data.

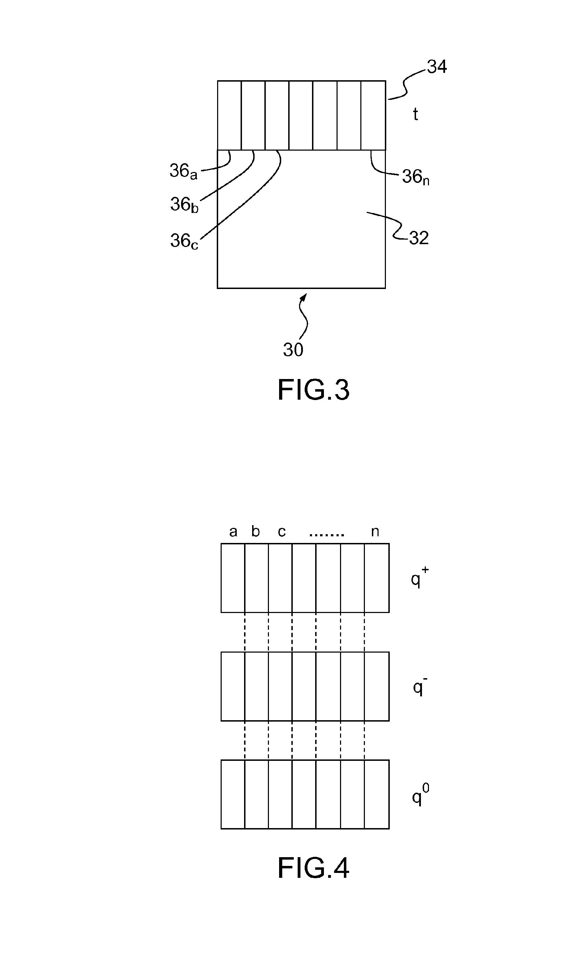

A data file 30 which can be transmitted from one mobile device to another has the form shown in figure 3. The data has a content portion 32 and a tag portion 34, the content portion containing data for rendering by the mobile device on the display 16 and/or through the speaker 14 depending on whether the content is video or audio or a combination of both.

The tag portion 34 includes a plurality of slots 36a,b,c,d.., that is, predetermined locations in the data structure which in the present example is a one dimensional array. Each slot is associated with a given subject category of content such that, for example, the first slot 36a is associated with art, the second slot 36b is associated with sport, the third slot 36c is associated with news etc... The sum of values in the different slots is constant, preferably equalled one for each tag. Thus, the subject area of the content determines the relative values of the different slots. In a simple case, where content is entirely and unambiguously news content, the third slot will be equal to one whilst the remaining slots will be equal to zero. However, there are situations where the content is not so well defined, and may fit into more than one category. A good example might be news content relating to a football match: such content could be viewed as both news and sport-related, in which case a tag would contain a value of 0.5 in the second slot and a value of 0.5 in the third slot.

It should be noted that in many instances, the distribution of slot values will be subjective, and will depend on the particular views of a given user. A feature of the present embodiments is that the slot values of a tag associated with a given content are updated through user feedback each time the content is passed from one user to another. Consequently, as the tag propagates through the network of mobile devices, it will provide a progressively more accurate reflection of the content to which it relates. However, as will become apparent further below, the actual categories to which each slot belongs may but need not be known or declared.

Each mobile device has, stored in the memory 28, a user profile 38 as shown in figure 4. The user profile 38 comprises three probability indicators referred to as $q+,q-,q0$ respectively. The first probability indicator $q+$ is a linear array of data slots at positions a,b,c...n. Each position corresponds to a subject category. Matching positions in a tag array and in the probability indicator corresponding to matching subject areas. Thus, the first, second and third positions of each probability indicator respectively correspond to art, sport, and news as is the case for the tags.

Each slot in the first probability indicator $q+$ is an indication of the relative level of liking that a user will have for content in the subject category to which the slot corresponds. For example, in the present example if the first slot in probability indicator $q+$ is equal to one and the remaining slots are equal to zero, it is clear that the user likes art only. The second probability indicator $q-$ is arranged as is the first probability indicator, except that the value of each slot represents an indication of the extent to which the user dislikes the relevant subject category. Likewise, the third probability indicator $q0$ provides an indication category by category of the extent to which a user is likely to have a neutral opinion of each category.

To facilitate the description, the probability indicators, as well as the tags, will be referred to as vectors. Mathematical operations such as the inner product of the usual meaning: that is the inner product of vectors $a = (a1,a2,a3...an)$, and $b = (b1,b2,b3...bn)$ is equal to $a1b1 +a2b2+ a3b3+..anbn$

When a data file 30 is received at the mobile device 10 from another mobile device, the communication stage 20 passes the content data 32 as well as the tag portion 34 to the processing stage 24. The processing stage performs the following steps in order to update the received tag.

1. The processing stage loads stored user interest profile which comprises probability indicators $q+,q-,q0$ whose values are obtained as a result of a previous iteration

2. The inner product of tag t and each $q+,q-,q0$ is computed to obtain the respective probabilities that user will like, dislike or be neutral: that is, $P+$, $P-,P0$ are calculated

3. A pseudo random result is generated which is representative of the relative probabilities $P+$, $P-,P0$ calculated at step 2. The result, say RES, can take values +,-,0 .

4. The processing stage decodes the content 32 and passes the decoded content output to the display and/or the speaker 14. Once the content has been rendered, either visually or acoustically or both, the processing stage is arranged to display a page at the display 16 inviting the user to enter a rating in response to the data that has been rendered. The user can input her rating using the keys 18, the processing stage being arranged to store in memory the rating in association with the received tag. The available ratings are: positive approval, referred to as "+"; disapproval, referred to as "-"; and, neutral, referred to as "0". These available options match the probability indicators of the interest profile. The input, say INP, can take values +,-,0.

5. The randomly generated result generated at step 3 (RES) and user input at step 4 (INP) are compared. If the randomly generated result at step 4 matches the result of the user input at step 5, the tag is not updated.

6. Otherwise, the tag is updated by adding an update vector to the tag vector, which update vector is proportional to the difference between the probability indicator q corresponding to the user input at step 4 ---that is q+ if INP=+, q- if INP=q-, and q0 if INP=0---and the interest profile vector q corresponding to the result obtained at step 3---that is q+ if RES=+, q- if RES=q-, and q0 if RES=0.

7. Updated tag is stored in place of the previous tag.

8. The interest profile of the user is also updated, in the manner described below.

9. The user then transmits the content with its updated tag to another user device, which in turn performs the steps above.

The tag of a content file can begin as (be initialised with) a known arbitrary positive vector that has a magnitude of one. Such a newly initialised tag is likely to be representative of the data to which it is associated.

When the tag is updated, it is on average brought more closely into alignment with its nominal "true value". Effectively, as outlined in the steps above, this is done by testing the tag (in conjunction with the interest profile of the user) to see whether the tag can be used to accurately predict how a data will rate the content. The tag is then modified by value that depends on whether the prediction was in fact correct.

The interest profile of a user device comprises q+,q-,q0 and is initialized to an arbitrary value, such that q+,q-, q0 sum up to one and are all positive. The interest profile of a user device q+,q-,q0 is updated every time a user views content and provides feedback. The user profile is updated as follows

1. The randomly generated result generated at step 3 (of the updating tags description) and user input at step 4 are compared. If they match, the profile is not updated.

2. Otherwise, vector proportional to the tag t is added to the probability indicator corresponding to the true measured result at step 4---i.e., to q+ if INP=+, to q- if INP=- and to q0 if INP=0--and the same vector is subtracted from the probability indicator corresponding to the randomly generated result at 3.

3. The updated interest profile is stored in place of the previous interest profile.

4. The interest profile is thus updated every time the user views new content and provides as input a rating.

The above description assumes that the user can give three different ratings +,-,0. However, the algorithm can work with any finite number of ratings. For example, the user could give 0,1,2,3,4, or 5 stars, the number of stars being an indication of the user interest or approval.

In one embodiment, the processing stage is arranged to select content to display or render to a user. In this respect, the processing stage can be viewed as including a filtering stage which effectively acts as a filter to only allow certain content to be displayed to the user. By only allowing certain content presented to a user, the filtering stage in effect recommends the content. Such an arrangement will be particularly advantageous in a situation in which the user device is able to access large numbers of files opportunistically. In such a situation, it would be cumbersome for the user to view all the content that has been accessed or is accessible, since much of the content may be of little interest to the user.

The processing stage reads the tag associated with receive data or with a received data link, and determines whether content is displayed to a user. A memory location in the memory 28 is reserved for an updatable threshold value tau which is used to determine whether to display content as set out in the following implementation steps in which predictions are used to make recommendations/filter items of content:

1. The processing stage of the mobile device maintains a threshold tau that is updated every time the user views a new item

2. When new content arrives, the processing stage computes probability P+ that the content will receive a positive rating (see step 2 of the method for updating tags)

3. If the probability P+ is below the threshold tau, the content is not displayed to the user

4. If the content is not displayed to the user, the threshold tau is decreased by a quantity proportional to rho, where rho a value between zero and one.

5. If the probability P+ is equal to or exceeds the threshold tau, the content is displayed to the user,

6. If the content is displayed to the user, then the threshold tau is increased by a quantity proportional to 1-rho, where rho a value between 0 and 1

7. The new threshold is updated accordingly and stored by the processing stage.

8. The process is repeated every time the user receives new content, and the threshold is used to determine whether new content is to be shown and is updated accordingly with each incoming item.

9. Using such a threshold to show contents and updating it improves the ratio of positively rated items, subject to the constraint that at least a percentage of 100 x rho% of the items received by the user will eventually be displayed.

In an alternative embodiment, predictions are used to make recommendations/filter content items as follows:

1. The mobile device maintains a threshold tau that is updated every time the user views a new item

2. When new content arrives, the user computes probability P+ that the content will receive a positive rating (see step 2 of the method for updating tags)

3. If the probability P+ is below the threshold tau, the content is not displayed to the user, and the threshold remains unchanged.

4. If the probability P+ is equal to or exceeds the threshold tau, the content is displayed to the user,

5. If the content is displayed to the user, the user views the content and is invited to provide +,-,0 as input. The input, say INP, can take values +,-,0.

6. If the user provides positive input (INP=+) the threshold tau is increased by a quantity proportional to 1-rho, where rho a value between 0 and 1

7. If the user provides either 0 or negative input (INP=0 or INP=-) the threshold tau is decreased by a quantity proportional to rho

8. The new threshold is updated accordingly and stored by the processing stage.

9. The process is repeated every time the user receives new content, and the threshold is used to determine whether new content is to be shown and, if it is shown, the threshold is updated accordingly.

10. Using such a threshold to show contents and updating it accordingly increases the number of items shown to the user, subject to the constraint that at least a percentage of 100 x rho% of the items received by the user are rated positively.

In the above embodiments, both the tags of contents and the interest profiles of users may be initialized with arbitrary vector values. The update processes described above alter these values and train both the tags of contents and the interest profiles of users.

As the content tags propagate through the network, both the content tags and the user profiles get trained.

An optional feature of the above embodiments is to use a publishing profile for each user. A publishing profile of a user is a vector consisting of the probabilities with which the user retrieves or generates content of a given category. Publishing profiles, which are optional, can be used as follows: instead of initializing the tag of new content with an arbitrary vector, the content tag can be initialized with the publishing profile of a user. Adding publishing profiles has the benefit of speeding up the convergence of both the interest profiles and content tags. However, there is an additional processing cost attached to maintaining publishing profiles.

The publishing profile helps the algorithm perform better. A publishing profile can be updated as follows

1. The publishing profile p of a user is initialized to an arbitrary vector that sums up to one (uniform is recommended but not required)

2. The publishing profile of a user is updated every time the user learns how another user rated its contents. This can occur, e.g., (but need not be limited to this implementation)

    a. When the user encounters another user that has rated its contents

    b. When the user encounters another user and asks this second user to rate its contents

    c. When user rate contents, they can propagate their responses along with their interest profiles over the network, until some reach the user that generated the content.

3. Let q+,q-,q0 be the interest profile of the user that viewed and rated the content, and INP the rating it gave the content.

4. The inner product of the publishing profile p and each q+,q-,q0 is computed to obtain the respective probabilities that user will like, dislike or be neutral: that is, P+, P-,P0 are calculated

5. A pseudo random result is generated which is representative of the relative probabilities P+, P-,P0 calculated at step 3. The result, say RES, can take values +,-,0 .

6. Randomly generated result generated at step 5 (RES) and user input at 3 (INP) are compared. If the randomly generated result at step 5 matches the result of the user input at step 3, the publishing profile is not updated.

7. Otherwise, the publishing profile is updated by adding an update vector to the publishing profile vector, which update vector is proportional to the difference between the probability indicator q corresponding to the user input at step 3 ---that is q+ if INP=+, q- if INP=q-, and q0 if INP=0---and the interest profile vector q corresponding to the result obtained at step 5---that is q+ if RES=+, q-if RES=q-, and q0 if RES=0.

8. Updated publishing profile is stored in place of the previous publishing profile.

9. The publishing profile is updated the same way every time the user learns the reaction of another user to its contents.

The above embodiments reduce the need for a centralized system or the maintenance of a large, distributed database. In addition, the need for require information about the item being recommended (e.g., in the form of tags entered by the users, or through the application of information retrieval techniques) is reduced, as is the need for information about a user's explicit interests. This may be particularly useful in situations in which users are not be able or willing to provide such feedback over their mobile devices. In addition, the above embodiments are suitable for a situation in which the content arriving at a user is constrained by the user's mobility, as well as on the content dissemination protocol.

The following provides details of the theoretical background of the above embodiments. It will be understood that the following comments are merely intended to explain the theoretical thinking that lies behind some the above embodiments, and that the terms used below are not intended to suggest or imply any limitations of the applicability of the embodiments or the conditions in which embodiments of the invention can operate.

*The model*

We denote by *U* the set of mobile users generating and sharing content in an opportunistic manner. We assume that content shared by users belongs to one of several possible *categories,* whose set we denote by *F*.

These categories form a partition of the "content universe" into groups of similar content items, *e.g.*, covering the same topics (music, sports, technology, *etc*.). Our assumption that items belong to only one category does not restrict the generality of our model, because the multi-category case can be easily reduced to the single-category case: for example, content covering music *and* technology can be considered as a new category, distinct from the "music" and "technology" categories.

Note that, although we do assume the existence of these categories, we do not assume a priori knowledge of which category an item belongs to or even what these categories actually represent. In other words, although content items may indeed cover "music" or "sports", our algorithms do not require a priori knowledge of the mapping of items to topics; they will not even need to know what these topics are. Because of this, the users will not need to declare the category in which the content they generate, share or view belongs.

We further assume that users may react to content in one of the following three ways: they may approve the content ("thumb it up"), reject the content ("thumb it down") or be indifferent to it. Alternatively, users rate websites according to a scoring system consisting of only three levels: positive, negative and neutral. We will use the symbols +, -, and Ø, respectively, to represent each of these three possible outcomes of viewing content, and will denote by *O*= {+,-, Ø} the set of these outcomes.

These outcomes are not a priori known; however, after a user views certain content, we assume that her reaction can be observed. For example, after viewing a certain content item, the user is asked to rate it by selecting one of the available three choices. This is the only feedback that we require from users.

| Table 1: Summary of Notation | |
| --- | --- |
| $U$ | Set of mobile users |
| $F$ | Set of content categories |
| $Q$ | Set of outcomes {+,-,Ø} |
| $Q_u, P_u$ | Observed interest and publishing profiles of $u$ |
| $Q_u{}^a, a \in u$ | Rows of $Q_u$ |
| $Q_u, p_u$ | Inherent interest and publishing profiles of $u$ |
| $q_u{}^a, a \in u$ | Rows of $Q_u$ |
| $D_1$ | Set of interest profiles |
| $D_2$ | Set of publishing profiles |

(continued)

### Table 1: Summary of Notation

| | |
|---|---|
| $\iota, t$ | Observed and inherent tags of an item |
| $\pi$ | Predicted outcome distribution of a viewing event |
| $\Pi$ | Outcome distribution of a viewing event |
| F | A prediction, *i.e.*, a r.v. sampled from |
| T | True outcome of a viewing event |
| r | Recommendation rate |
| r+ | Approval rate |
| T | Threshold |

We recall that a goal of our distributed prediction algorithm is the following: given a user and a content item, the algorithm should accurately predict the reaction of this user after viewing this particular item. More formally, given a user and a content item, our prediction algorithm outputs a distribution over $O$, which we denote by $\hat{\pi}$. We will say that our prediction is correct if $\hat{\pi}_{+}$, $\hat{\pi}$ and $\hat{\pi}_{+}$ are indeed the probabilities that the user accepts, rejects or ignores this content, respectively. In this section, we give a detailed presentation of our algorithm;

*User Profiles and Content Tags.*

Our distributed prediction algorithm maintains the following variables. Each user $u \in U$ maintains three vectors $\hat{q}+_u, \hat{q}-_u, \hat{q}\emptyset_u \in [0, 1]^{|F|}$. Intuitively, each element $\hat{q}_{+uf}$, $\hat{q}_{-uf}$ and $\hat{q}_{\emptyset uf, f} \in F$, is an estimate of the probability that user $u$ with accept, reject or ignore an item from category $f$.

We will call the $3 \times |F|$ matrix

$$\hat{Q}_u = \begin{bmatrix} \hat{q}_u^+ \\ \hat{q}_u^- \\ \hat{q}_u^\emptyset \end{bmatrix} \in \mathbb{R}^{3 \times |\mathcal{F}|}$$

the *observed interest profile* of $u$. By definition, $\hat{Q}_u \in D_1$, where

$$D_1 = \left\{ \begin{bmatrix} x \\ y \\ z \end{bmatrix} \in \mathbb{R}^{3 \times |\mathcal{F}|} : x, y, z \geq 0, \text{ and } x + y + z \right.$$

In other words, every element of $\hat{Q}_u$ is positive and each of its columns sums to one.

Moreover, each user $u \in U$ maintains a vector $\hat{p}_u \in [0, 1]^{|F|}$, which we call the *observed publishing profile* of $u$. Intuitively, each element $\hat{p}_{uf}$, $f \in F$ is an estimate of the probability that an item generated by $u$ will belong to category $f$. At any point in time, $\hat{p}_u \in D_2$ where

$$D_2 = \left\{ x \in \mathbb{R}^{|\mathcal{F}|} : x \geq 0, \sum_{f \in \mathcal{F}} x_f = 1 \right\}.$$

In other words, the entries of $\hat{p}_u$ are non-negative and sum up to one.

Finally, each content item is associated with an *observed tag* $\hat{t} \in D_2$.

Intuitively, each element $\hat{t}_f$, $f \in F$ is an estimate of the probability that the item belongs to category *f*.

*Predicted Outcome Distribution.*

Using these variables, the prediction about the reaction of a given user *v* to a given item with tag $\hat{t}$ is given by the following distribution over *O*.

$$\hat{\pi} = \hat{Q}_u \hat{t}^T.$$

(1)

In other words, our algorithm's prediction is fully determined by the tag $\hat{t}$ and the observed interest profile $\hat{Q}_u$ of user *u*.

The tag $\hat{t}$ of a content item is updated every time the content is viewed by a user. The interest profile $\hat{Q}_u$ of a user $u \in U$ is updated every time *u* views and reacts to new content. Finally, the vector $\hat{p}_u$ isupdated every time *u* receives feedback from another user *v* that has viewed and reacted to a content item generated by *u*. All three update processes occur in a distributed manner and rely only on the minimal feedback provided by the users and information stored locally; we describe each one in more detail below.

*Updating the Content Item Tags.*

Recall that each content item carries its observed tag $\hat{t} \in D_2$. This tag is initialized to the observed publication profile $\hat{p}_u$ of the user *u* that generated the item. It is then propagated along with the content item and is updated every time the content is viewed by a new user. In what follows, we describe how these updates take place in more detail.

Whenever a user *v* receives the content item carrying the tag *t*, it generates a random variable $P \in O$, which we call a *prediction,* sampled from the distribution $\hat{\pi}$ given by (1) That is,

$$\mathbf{P}(\mathcal{P} = a) = \langle \hat{t}, \hat{q}_v^a \rangle, \quad a \in \mathcal{O},$$

where $\langle \cdot, \cdot \rangle$ denotes the inner product. After generating the prediction *P,* user v subsequently views the content and reacts to it: let then $T \in O$ be the true outcome of the content viewing.

Let $\hat{t}(k)$, $k = 1, 2,...$ be the value of the tag at the *k*-th viewing, and $v(k) \in U$ be the user that views the item. We define $\hat{t}_{(0)} = \hat{p}_u$ to be the initial value of the tag (*i.e.*, the observed publishing profile of the user that generated it). Then $\hat{t}(k)$ evolves according to the following iterative algorithm:

$$\hat{t}(k+1) = \Pi_{D2}\left(\hat{t}(k) + \gamma(k) \sum_{a \in \mathcal{O}} (1_{T(k)=a} - 1_{P(k)=a}) \hat{q}_{v(k)}^a\right)$$

(2)

where $\Pi_{D2} : R^{|F|} \rightarrow D_2$ the orthogonal projection on $D_2$, $y(k)$ a decreasing gain factor, $1_E$ the indicator function of event *E* and $\hat{q}_v^a$, $a \in O$, the rows of $\hat{Q}_v$. We note that, due to the simple geometry of $D_2$, there are known algorithms that compute $\Pi_{D2}$ in $O(|F|)$ time.

In words, if the prediction was correct (*i.e.*, *T = P*), then $1_{T=a} = 1_{P=a}$ for all $a \in O$, and the tag t does not change after the viewing. If however the prediction was wrong and, *e.g.*, *P = +* while *T = -* (a positive reaction was predicted but the user reacted negatively), then the quantity $\gamma\hat{q}_{+v}$ is removed from t and the quantity $\gamma\hat{q}_{-v}$ is added to it; a similar "movement of mass" occurs in the other cases of erroneous predictions.

Some intuition behind (2) is the following: Since $\hat{t}$ captures our belief on the category to which the item belongs, the fact that we predicted wrongly should change our belief. The categories that were most likely to elicit a positive reaction where the ones corresponding to the highest elements of $\hat{q}_{+v}$, while the categories that were most likely to elicit a negative reaction where the ones corresponding to the highest elements of $\hat{q}_{-v}$ ; hence, in the above example, adding and removing the respective vectors to $\hat{t}$ diminishes our "belief' in that the item belongs in the former categories, while it reinforces our belief that it belongs on the latter categories.

*Updating the Observed Interest Profiles.*

The observed interest profile $\hat{Q}_v$ of a user $v \in U$ is also updated every time the user views a content item. We again use an iterative algorithm employing the discrepancies between the predicted outcome $P$ and the true outcome $T$. In particular, if $\hat{Q}_v(k)$ is the observed interest profile of $v$ at the $k$-th viewing event, and $\hat{t}(k)$ is the observed tag of the item being viewed, then $\hat{Q}_v(k)$ evolves in the following manner:

$$\hat{Q}_v(k+1) = \Pi_{D_1} \left( \hat{Q}_v(k+1) + \gamma(k) \begin{bmatrix} (\mathbb{1}_{\mathcal{T}(k)=+} - \mathbb{1}_{\mathcal{P}(k)=+})\hat{t}(k) \\ (\mathbb{1}_{\mathcal{T}(k)=-} - \mathbb{1}_{\mathcal{P}(k)=-})\hat{t}(k) \\ (\mathbb{1}_{\mathcal{T}(k)=\varnothing} - \mathbb{1}_{\mathcal{P}(k)=\varnothing})\hat{t}(k) \end{bmatrix} \right)$$

where $\Pi_{D_1} : R^{3 \times |F|} \to D_1$ is the orthogonal projection onto $D_1$ and $\gamma(k)$ a decreasing gain factor. The projection $\Pi_{D_1}(Q)$, $Q \in R^{3 \times |F|}$ can be computed by projecting each of the columns of $Q$ to the set

$$\{x \in \mathbb{R}^3 : x \geq 0, x_1 + x_2 + x_3 = 1\},$$

so it too can be computed in $O(|F|)$ time.

Put simply, if the prediction was correct (*i.e.*, $T = P$), the observed interest profile $\hat{Q}_v$ does not change after the viewing. If however the prediction was wrong and, *e.g.*, $P = +$ while $T = -$, then the quantity $\gamma t$ is removed from the first row of $\hat{Q}_v$ is added to the second row. Again, a similar "movement of mass" occurs in the other cases of erroneous predictions.

To gain some intuition behind (2) recall that $\hat{Q}_{vf}$ captures our belief on likelihood of an outcome in $O$ when shown an outcome in category $f$. Again, a wrong prediction forces us to change our belief. The highest values in tag $\hat{t}$ indicate to us which categories are most likely to characterize this content; removing $\gamma t$ from the $\hat{q}_{+v}$ row and adding it to $\hat{q}_{-v}$ diminishes our belief that these categories are liked by the user and increases our belief that they are disliked.

*Updating the Observed Publishing Profiles.*

To update the profile $\hat{p}_u$ of a user $u \in U$ we will require that $u$ receives some feedback from users that view items it generates. This feedback should contain their reaction to the item they viewed as well as their observed interest profile $\hat{Q}_v$ at the time. Retrieving this feedback can be implemented in a variety of ways. For example, a user $v$ can provide this to $u$ when they meet. Alternatively, $v$ can propagate "acknowledgement" packets aiming to reach $u$-which costs more in terms of bandwidth. We will not require that *all* such acknowledgements reach $u$; it suffices that some of them do with a non-zero probability.

The message reaching user $u$ should contain (a) the reaction $T \in O$ of the user $v$ to the content item and (b) the observed interest profile $\hat{Q}_v$ of $v$. User $u$ then generates a random predicted outcome $P$ from the distribution $\hat{Q}_v \hat{p}_u^T$. In particular

$$\mathbf{P}(\mathcal{P} = a) = \langle \hat{p}_u, \hat{q}_v^a \rangle, \quad a \in \mathcal{O}.$$

Let $\hat{p}_u(k)$, $k = 1, 2, ...$ be the observed publishing profile of $u$ at the $k$-th item generation, and $V(k) \subseteq U$ be the set of users providing feedback on the item $k$. Then, $\hat{p}_u(k)$ evolves according to the following iterative algorithm:

$$\hat{P}_u(k+1) = \Pi_{D2}\left(\hat{P}_u(k) + \gamma(k) \sum_{v\in V(k),\ a\in} \mathcal{O}(1 \mathcal{T}_{v(k)=a} - 1 \mathcal{P}_{v(k)=a})\hat{q}_v^a\right) \tag{4}$$

where, again, $\Pi_{D2} : R^{|F|} \rightarrow D_2$ is the orthogonal projection on $D_2$, and $\gamma(k)$ a decreasing gain factor. Note the similarities between (2) and (4), and that the prediction $P$ used in each case is sampled from different probability distributions- $\hat{Q}_v\hat{t}^T$ and $\hat{Q}_v\hat{p}_u^T$, respectively.

*Recommendation Algorithm.*

The previous section described the algorithm we employ to predict the reaction of a user to a given content item. In this section we illustrate the usefulness of such predictions in giving recommendations to users.

Recall that the goal of our recommendation algorithm is to select a subset of all the items a user receives and recommend it to the user for viewing. We will show that if for a given user/item pair the predicted outcome distribution $\hat{\pi}$ is correct, we can use this information to make optimal recommendations to users.

The optimality of a recommendation depends on the objectives set by the user. It is reasonable to assume that users prefer to see content that they like, rather than content which they dislike or are indifferent to. On the other hand, users may wish to see as much content as possible: designing a system in which almost no content is recommended defies the purpose of content sharing in the first place. Based on the above observations, we design recommendation algorithms that meet the following two objectives: (a) maximize the fraction of content items that are approved and (b) maximize the number of content items shown to the user. Below, we discuss these two in more detail, and present the distributed recommendation algorithms that indeed meet these objectives.

*Optimization Objectives.*

Assume that a sequence of content items, labeled sequentially as 1, 2, 3,... arrive at a given user. Let $N(k)$ be the number of items that the engine has recommended to the user after the arrival of the $k$-th item. Similarly, let $N_+(k)$ be the number of such items that have been approved by the user after the arrival of the $k$-th item. Clearly $N_+(k) \leq N(k)$, as the user reacts only to items recommended by our engine. Let

$$r = \lim_{k\to\infty} \frac{N(k)}{k} \qquad r_+ = \lim_{k\to\infty} \frac{N_+(k)}{N(k)}$$

be the fraction of items recommended to the user and the fraction of these items that are approved, respectively. We will refer to $r, r_+$ as the *recommendation rate* and the *approval rate*, respectively.

The first objective that we would like our recommendation engine to meet is the following:

$$\text{Maximize:} \qquad r_+, \tag{5a}$$

$$\text{subject to:} \qquad r = \rho, \tag{5b}$$

for some $\rho \in (0, 1)$. In other words, the objective set by (5) is to maximize the approval rate of the user, while maintaining the recommendation rate equal to $\rho$.

The above objective is suitable when the user desires to see a specific, steady volume of content items. However, it does not give guarantees on how good $r+$ will be: it will be the maximum possible, but that will largely depend on the quality of the content arriving at the user. Our second objective aims at giving guarantees in terms of $r+$, rather than $r$:

$$\text{Maximize:} \qquad\qquad r, \qquad\qquad (6a)$$

$$\text{subject to:} \qquad\qquad r_+ \geq \rho, \qquad\qquad (6b)$$

where, again, $\rho \in (0, 1)$. This objective guarantees that the approval rate of the content shown to the user will be at least $\rho$. It is more suitable than (5) when the user prefers guarantees on the quality-rather than the volume-of the content recommended to her.

*Distributed Recommendation Algorithms.*

In this section we present two distributed algorithms for recommending items in a manner that achieves the objectives (5) and (6) respectively.

The recommendation algorithm that solves the optimization problem (5) works as follows. At each point in time, the mechanism maintains a threshold $\tau$. When a new item arrives, the recommendation algorithm retrieves from the prediction algorithm the predicted outcome distribution $\pi$. The item is recommended to the user if and only if $\pi_+ \geq \tau$.

Let $k = 1, 2,...$ be the $k$-th item reaching the user. Then, the threshold $\tau$ is updated every time a new item arrives in the following manner:

$$\tau(k + 1) = \tau(k) + \gamma(k)\left( \mathbb{1}_{\pi_+(k) \geq \tau(k)} - \rho \right) \qquad (7)$$

where $\gamma(k)$ is a decreasing gain factor. Intuitively, the threshold decreases whenever the quantity $\pi+(k)$ drops below $\tau$ and increases whenever $\pi+(k)$ is above $\tau$.

The recommendation algorithm that solves (6) is similar. A threshold $\tau$ is again used to determine whether an item with a given $\pi+$ will be recommended to the user. The difference between the two algorithms lies in how this threshold is updated.

More specifically, let $k = 1, 2,...$ be the $k$-th item reaching the user. If the item is shown to the user, denote by $T$ the random variable indicating the actual reaction of the user to this item. Then the threshold $\tau$ is updated as follows

$$\tau(k+1) = \tau(k) + \gamma(k)\left( \mathbb{1}_{\pi_+(k) \geq \tau(k) \wedge \mathcal{T}(k)=+} - \rho\, \mathbb{1}_{\pi_+(k) \geq \tau(k)} \right) \qquad (8)$$

where $\gamma(k)$ a decreasing gain factor. Intuitively, the threshold increases when the item is shown and receives a positive reaction, and decreases under other outcomes.

## EP 2 434 723 A1

**Claims**

1. A method of improving the accuracy of classification data as the classification data is propagated through a network of mobile devices, the classification data relating to the classification of content, including:

   (i) establishing a connection between a first mobile device and a second mobile device;
   (ii) receiving, at the first mobile device, classification data from the second mobile device, which classification data is associated with a given content, the classification data being dependent on the classification of the given content;
   (iii) updating the classification data by performing a training step thereon at least in part at the first mobile device; and,
   (iv) forwarding the updated classification data to a third mobile device.

2. A method as claimed in claim 1, wherein the training step includes:

   rendering the content at least in part on the first mobile device; and, obtaining a user response to the content.

3. A method as claimed in claim 2 wherein the training step further includes:

   making a prediction of a user response to the content associated with the received classification data; and, comparing the predicted user response with the actual user response to the given content, the classification data being updated in dependence on the result of the comparison.

4. A method as claimed in claim 3, wherein the prediction is made using a user profile dependent on the interests of the user, and the classification data.

5. A method as claimed in claim 4, including the further step of updating the user profile.

6. A method as claimed in any of the preceding claims, wherein the content associated with the classification data is received from the second mobile device.

7. A method as claimed in any of claims 1 to 5, wherein the content associated with the classification data is referenced in a pointer received from the second mobile device such that the first mobile device can use the pointer to obtain said content from a location remote to the first mobile device.

8. A method as claimed in any of the preceding claims, wherein the or each classification data is such that it can be represented by a linear array having a plurality of positions, the array forming a vector, and each position being associable with a respective subject category.

9. A method as claimed in claim 8, wherein the user profile is such that it can be represented by a plurality of vectors each of which is arranged as an array, each array having a plurality of positions, matching array positions in the user profile and in the tag being associated with matching subject categories.

10. A method as claimed in claim 9 when dependent on claim 2, wherein the user response is obtained by performing an operation which can be represented as the inner product between the tag vector and at least one of the user profile vectors.

11. A method as claimed in any of the preceding claims, wherein the classification data is propagated through the network by being passed from one mobile device to another mobile device, a training step being performed on the classification data at each given mobile device before the so-trained classification data is passed to another mobile device.

12. A mobile device for use in a network, the mobile device having a communication stage for establishing a connection with another mobile device; a processing stage for processing data, the communication stage being arranged to receive classification data from the other mobile device, which classification data is associated with a given content, the classification data being dependent on the classification of the given content, the processing stage being arranged to perform a training step on the classification data before the classification data is forwarded to another device.

**13.** A mobile device as claimed in claim 12, wherein the mobile device is arranged to render the content at least in part, and has a user interface for a user to enter a response indicative of the user's rating of the content.

**14.** A mobile device as claimed in any of claim 13, wherein the processing stage is arranged to use the user response in order to perform the training step on the classification data.

**15.** A mobile device as claimed in clam 13 or claim 14, wherein the processing stage has access to a stored user profile which provides an indication of user interest in one or more categories of content, and is arranged to perform the training step in dependence on the user profile and the user response.

FIG.1

FIG.2

FIG.3

FIG.4

Europäisches
Patentamt

European
Patent Office

Office européen
des brevets

# EUROPEAN SEARCH REPORT

**Application Number**

EP 11 16 0675

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | STRATIS IOANNIDIS ET AL: "Surfing the Blogosphere: Optimal Personalized Strategies for Searching the Web", INFOCOM, 2010 PROCEEDINGS IEEE, IEEE, PISCATAWAY, NJ, USA, 14 March 2010 (2010-03-14), pages 1-9, XP031674966, ISBN: 978-1-4244-5836-3 * section III. * | 1-15 | INV. H04L29/08 H04N21/00 |
| A | GUENTHER HOELBLING ET AL: "PersonalTV; A TV recommendation system using program metadata for content filtering", MULTIMEDIA TOOLS AND APPLICATIONS, KLUWER ACADEMIC PUBLISHERS, BO, vol. 46, no. 2-3, 15 September 2009 (2009-09-15), pages 259-288, XP019773161, ISSN: 1573-7721 * section 3 * | 1-15 | |
| | | | TECHNICAL FIELDS SEARCHED (IPC) |
| | | | H04L H04N |

The present search report has been drawn up for all claims

| Place of search | Date of completion of the search | Examiner |
|---|---|---|
| Munich | 20 January 2012 | Biro, Udo Bela |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)